# EUROPÄISCHE PATENTSCHRIFT

(11) **EP 2 614 761 B1**
(45) Veröffentlichungstag und Bekanntmachung des Hinweises auf die Patenterteilung: **13.04.2016**
(21) Anmeldenummer: 12008434.8
(22) Anmeldetag: 19.12.2012
(51) Int. Cl.: A47L 9/24

(54) **Dichtsystem für ein Staubsauger-Saugrohr**
Seal system for a vacuum cleaner suction hose
Système d'étanchéité pour un tuyau d'aspiration d'aspirateur

(30) Priorität: 10.01.2012 DE 102012000282
(43) Veröffentlichungstag der Anmeldung: 17.07.2013
(73) Patentinhaber: Fischer Rohrtechnik GmbH, 77855 Achern-Fautenbach (DE)
(72) Erfinder: Cordes, Martin, 59846 Sundern (DE); Cordes, Stephan, 59821 Arnsberg (DE)
(74) Vertreter: Gesthuysen Patent- und Rechtsanwälte

(56) Entgegenhaltungen:
- EP-A2- 2 277 427
- DE-A1-102010 023 920
- DE-B3-102006 030 138
- DE-U1- 20 114 394

## Beschreibung

Die Erfindung betrifft ein Dichtsystem zur Abdichtung zwischen einem Innenrohr und einem Außenrohr eines teleskopierbaren Staubsauger-Saugrohrs, umfassend mindestens einen ringförmigen Grundkörper aus einen ersten Material.

Staubsauger-Saugrohre, deren Länge durch Verschieben eines Innenrohrs relativ zu einem Außenrohr einstellbar ist, sind im Stand der Technik in einer Vielzahl von Ausgestaltungen bekannt. Das Innenrohr und das Außenrohr bilden einen Saugkanal zwischen beispielsweise einer Bodendüse und dem Saugschlauch des Staubsaugers. Durch den Staubsauger wird ein Unterdruck verursacht, der den Saugeffekt an der Bodendüse hervorruft. Um das Eindringen von Nebenluft in den Saugkanal im Betriebszustand zu verhindern und damit die Energieeffizienz des Staubsaugers zu steigern, ist eine Abdichtung des Übergangsbereichs zwischen dem Innenrohr und dem Außenrohr erforderlich. Das Innenrohr ist dabei innerhalb des Außenrohrs geführt.

Üblicherweise entspricht die Außenkontur des Innenrohrs etwa der Innenkontur des Außenrohrs, so dass nur ein kleiner Ringspalt verbleibt, der abgedichtet werden muss. Dabei stellt sich stets die Herausforderung, dass das Verschieben des Innenrohrs relativ zum Außenrohr bei bestmöglicher Abdichtung mit geringem Aufwand und auf einfache Weise erfolgen können muss, um die Bedienbarkeit des Staubsauger-Saugrohrs nicht zu beeinträchtigen. Aus dem Stand der Technik bekannte Dichtsysteme für Staubsauger-Saugrohre weisen dabei den Nachteil auf, dass entweder die Anforderungen an die Dichtigkeit des Systems nicht erreicht werden oder eine einfache Bedienbarkeit des Staubsauger-Saugrohrs nicht in ausreichendem Maße gewährleistet ist.

Ein bekanntes Dichtsystem ist in DE 201 14 394 U beschrieben.

Der vorliegenden Erfindung liegt daher die Aufgabe zugrunde, ein Dichtsystern anzugeben, das eine größtmögliche Abdichtung bei gleichzeitig einfacher Bedienbarkeit des Staubsauger-Saugrohrs gewährleistet.

Die Aufgabe wird dadurch gelöst, dass an dem Grundkörper ein ringförmiger Dichtkörper aus einem zweiten Material angeordnet ist, wobei der Dichtkörper an den Grundkörper angespritzt ist. Der Dichtkörper ist an dem Grundkörper angeordnet, so dass der Grundkörper und der Dichtkörper eine Baueinheit bilden. Sowohl der Grundkörper als auch der Dichtkörper sind ringförmig ausgestaltet, was bedeutet, dass sie im Bezug auf ihre Längserstreckung zumindest teilweise eine ringförmig geschlossene Kontur aufweisen. Neben kreisförmigen Konturen sind für den Dichtkörper und den Grundkörper beliebige geschlossene Konturen vorgesehen, wobei oval Konturen oder kreisförmige Konturen mit abgeflachten Bereichen bevorzugt sind.

Der Grundkörper weist orthogonal zu seiner Kontur eine Länge auf, so dass sich der Grundkörper im Montagezustand zumindest teilweise koaxial zur Mittelachse des Innenrohrs bzw. des Außenrohrs erstreckt. Der Grundkörper weist an seinem Innenumfang vorzugsweise einen Absatz auf, so dass das Dichtsystem auf ein Innenrohr aufsteckbar ist. Im Montagezustand erstreckt sich folglich das Dichtsystem, insbesondere der Grundkörper, zumindest teilweise auf dem Außenumfang des Innenrohrs und damit zwischen dem Innenrohr und dem Außenrohr. Vorzugsweise wird der zwischen Innenrohr und Außenrohr verbleibende Ringspalt zumindest teilweise durch das Material des Grundkörpers ausgefüllt. Der Grundkörper dient dabei zur Stabilisierung beim Verschieben des Innenrohrs innerhalb des Außenrohrs. Durch den Grundkörper wird ferner der Mindestabstand zwischen Innenrohr und Außenrohr festgelegt. Des Weiteren dient der Grundkörper vorzugsweise als Ausziehsperre, damit das Innenrohr nicht unbeabsichtigt aus dem Außenrohr herausgezogen werden kann.

Der Dichtkörper dient dem Abdichten des Übergangs - des Ringspalts - zwischen Innenrohr und Außenrohr, so dass keine Nebenluft durch den Ringspalt in den Saugkanal des Staubsauger-Saugrohrs eindringen kann. Durch den Dichtkörper werden Maßtoleranzen des Außenrohrs ausgeglichen, indem sich der Dichtkörper flexibel an den Innenumfang des Außenrohres anlegt.

Der Grundkörper und der Dichtkörper sind aus unterschiedlichen Materialien - einem ersten Material für den Grundkörper und einem zweiten Material für den Dichtkörper - hergestellt, so dass das jeweilige Material individuell auf die Funktion des Bauteils - des Dichtkörpers oder des Grundkörpers - abgestimmt werden kann. "Unterschiedliche Materialien" bedeutet lediglich, dass die Materialien nicht identisch sind, jedoch aus derselben Materialkategorie oder Materialobergruppe stammen können. So können beispielsweise der Grundkörper und der Dichtkörper aus zwei unterschiedlichen Elastomeren hergestellt sein. Eine geringfügig unterschiedliche Zusammensetzung der Materialen reicht aus, wobei es sich im Sinne der Erfindung auch um unterschiedliche Materialien handelt, wenn beispielsweise ein reines Material für den Grundkörper und das gleiche Material allerdings mit einem darin dispergierten Granulat für den Dichtkörper vorgesehen ist.

Die Erfindung weist den Vorteil auf, dass durch die Verwendung von unterschiedlichen Materialien für die verschiedenen Bauteile des Dichtsystems, jedes Bauteil auf seine primäre Funktion innerhalb des Dichtsystems abgestimmt ist, wodurch eine nahezu vollständige Abdichtung bei gleichzeitig leichter Bedienbarkeit bei der Teleskopierung des Staubsauger-Saugrohrs gewährleistet ist.

Als vorteilhaft hat sich gemäß einer ersten Ausgestaltung herausgestellt, wenn der Dichtkörper zumindest teilweise auf einem Außenumfang des Grundkörpers angeordnet ist. Der Dichtkörper ist auf die Außenfläche, nämlich auf den Außenumfang des ringförmigen Grundkörpers aufgebracht, so dass sich der Dichtkörper zumindest teilweise auf dem Außenumfang des Grundkörpers erstreckt. Die Erstreckung des Dichtkörpers im Montagezustand in Achsrichtung des Staubsauger-Saugrohrs - die Breite des Dichtkörpers - ist geringer als die gleichgerichtete Erstreckung des Grundkörpers - die Breite des Grundkörpers, wobei die Breite des Dichtkörpers etwa 1/3 der Breite des Grundkörpers entspricht. Der Dichtkörper ist vorzugsweise in einem Endbereich des Grundkörpers angeordnet, vorzugsweise in dem Endbereich des Grundkörpers, der im auf das Innenrohr aufgeschobenen Montagezustand von dem Innenrohr abgewandt ist.

Gemäß einer weiteren vorteilhaften Ausgestaltung ist vorgesehen, dass der Grundkörper in einem Außenumfang mindestens einen Absatz aufweist, und dass der Dichtkörper in dem Absatz angeordnet ist. Der Absatz stellt einen Rücksprung aus der Außenfläche des Grundkörpers dar, so dass der Absatz zumindest einen geringeren Umfang als der unmittelbar umgebende Rest des Grundkörpers aufweist. Der Absatz ist vorzugsweise in einem Endbereich des Grundkörpers angeordnet, der im auf das Innenrohr aufgesteckten Montagezustand von dem Innenrohr abgewandt ist. Der Dichtkörper ist in diesem Absatz angeordnet, was bedeutet, dass der Dichtkörper im Bereich des Absatzes mit dem Grundkörper in Verbindung steht. Bei einem vollständig runden Grundkörper ist der Absatz beispielsweise als Bereich mit reduziertem Durchmesser im Endbereich des Grundkörpers vorgesehen. Die Höhe des Absatzes entspricht vorzugsweise etwa 1/5 der Breite des Grundkörpers.

Des Weiteren hat sich gemäß einer nächsten Ausgestaltung als vorteilhaft herausgestellt, wenn der Grundkörper in einem Außenumfang mindestens eine Nut aufweist, und dass der Dichtkörper in der Nut angeordnet ist. Die Nut ist in einem Außenumfang des ringförmigen Grundkörpers vorgesehen und befindet sich vorzugsweise in einem Endbereich des Grundkörpers, vorzugsweise in dem Endbereich, der im auf das Innenrohr aufgesteckten Montagezustand von dem Innenrohr abgewandt ist. Die Nut bildet somit einen ringförmig um den Grundkörper verlaufenden Rücksprung in der Außenfläche des Grundkörpers, der beidseitig von einer Nutflanke begrenzt wird. Die Nutflanken weisen vorzugsweise eine gleiche Höhe auf und dienen der stabilisierenden Halterung des Dichtkörpers. Je nach Ausgestaltung ist die Materialstärke des Grundkörpers so gewählt, dass die Nut lediglich in der Wand des Grundkörpers vorgesehen ist oder alternativ so, dass die Nut als Ausprägung auf der Innenfläche des Grundkörpers sichtbar ist. Für den Fall, dass die Nut auf dem Innenumfang des Grundkörpers ausgeprägt ist, dient sie vorzugsweise als Anschlag für ein in den Grundkörper eingestecktes Innenrohr. Das Innenrohr kann folglich so weit in den Grundkörper eingesteckt werden, bis es mit seiner gesamten Stirnfläche an der Nut - am Innenumfang - anliegt.

Gemäß der Erfindung ist vorgesehen, dass der Dichtkörper an dem Grundkörper angespritzt ist. Das Dichtsystem wird folglich dadurch hergestellt, dass der Dichtkörper auf den vorhandenen Grundkörper aufgespritzt bzw. angeformt wird. Der Dichtkörper wird somit auf dem bestehenden Grundkörper urgeformt, indem er beispielsweise in die Nut oder in den Absatz in pastösem oder flüssigen Zustand eingebracht wird und dort vorzugsweise unterstützt durch eine Form verfestigt. Auf diese Weise können zwischen Dichtkörper und Grundkörper zur Verbindung auch Hinterschnitte realisiert werden oder das Material des Dichtkörpers dazu genutzt werden, Bereiche des Grundkörpers auszufüllen.

Zur vorteilhaften Abdichtung des Staubsauger-Saugrohrs zwischen Innenrohr und Außenrohr hat sich als vorteilhaft herausgestellt, wenn der Dichtkörper eine Dichtfläche aufweist, insbesondere die Dichtfläche eine Breite zwischen 0,5 mm und 3,0 mm aufweist. Die Dichtfläche wird durch den Dichtkörper gebildet und erstreckt sich ringförmig um den Grundkörper, so dass der Ringspalt zwischen Innenrohr und Außenrohr vollständig durch den Dichtkörper abgedichtet wird. Der Dichtkörper liegt mit seiner Dichtfläche am Innenumfang des Außenrohrs an und dichtet somit das System ab. Die Dichtfläche weist eine Breite zwischen 0,5 mm und 3,0 mm im unbelasteten Zustand auf, wobei mit Breite die Erstreckung der Dichtfläche in Achsrichtung des Innenrohrs bzw. des Außenrohrs im Montagezustand gemeint ist. Die Breite kann sich im Montagezustand durch das Anliegen der Dichtung am Innenumfang des Außenrohrs vergrößern, da die Dichtung im Montagezustand vorzugsweise gestaucht wird, um eine zuverlässige Abdichtung zu gewährleisten. Die Breite der Dichtfläche entspricht vorzugsweise der Breite des Dichtkörpers.

Eine weitere Ausgestaltung sieht vor, dass der Dichtkörper einen im Wesentlichen rechteckigen Querschnitt aufweist. Durch den rechteckigen Querschnitt lässt sich der Dichtkörper auf einfache Weise auf dem Absatz oder in der Nut anbringen und verfügt auf seinem der Nut oder dem Absatz abgewandten Außenumfang eine Dichtfläche auf, die der Breite des Grundkörpers entspricht. Die Eckbereiche des Querschnitts sind vorzugsweise abgerundet oder weisen eine Fase auf.

Des Weiteren ist zur vorteilhaften Abdichtung des Staubsauger-Saugrohrs zwischen Innenrohr und Außenrohr gemäß einer weiteren Ausgestaltung vorgesehen, dass der Dichtkörper eine flexible Dichtlippe aufweist. Die Dichtlippe liegt flexibel am Innenumfang des Außenrohrs an, so dass auch bei Unebenheiten eine Abdichtung des Ringspalts zwischen Innenrohr und Außenrohr durch die Dichtlippe des Dichtkörpers gewährleistet ist. Die Dichtlippe ist beispielweise in einem Winkel von 90° zum Außenumfang des Grundkörpers orientiert. Die Breite der Dichtlippe ist vorzugsweise wesentlich geringer als die Breite des Dichtkörpers insgesamt.

Gemäß einer Weiterbildung ist vorgesehen, dass die Dichtlippe geneigt ist, insbesondere die Dichtlippe in Radialrichtung eine abnehmende Materialstärke aufweist. Besonders bevorzugt ist die Dichtlippe - ausgehend von einem Endbereich des Grundkörpers - in Richtung des Grundkörpers geneigt, so dass die Dichtlippe in Richtung ihrer Neigung flexibel ausweichen kann und mit einer geringen Vorspannung an der Innenfläche des Außenrohrs anliegt. Durch den Unterdruck, der durch den Staubsauger während des Betriebs im Staubsauger-Saugrohr entsteht, wird die Dichtlippe des Dichtkörpers zusätzlich an die Innenwand des Außenrohrs gezogen, wodurch ein zusätzlicher Anpressdruck und eine Abdichtung erzielt wird. Ändert sich beispielsweise beim Verschieben des Innenrohrs relativ zum Außenrohr der Ringspalt zwischen Innenrohr und Außenrohr, stellt sich die flexible Dichtlippe auf und gewährleistet eine zuverlässige Abdichtung. Die Dichtlippe weist mit zunehmendem Abstand in radialer Richtung zur Mittelachse des Grundkörpers eine Abnehmende Materialstärke auf, so dass die Dichtlippe in Radialrichtung spitz zuläuft. Dadurch wird die Flexibilität der Dichtlippe gesteigert, so dass sich die im Endbereich sehr dünne Dichtlippe auch an geringe Unebenheiten zuverlässig anschmiegt.

Eine zuverlässige Abdichtung wird ferner gemäß einer nächsten Ausgestaltung dadurch gewährleistet, dass die größte Außenkontur des Dichtkörpers größer als die größte Außenkontur des Grundkörpers ist. Durch diese Ausgestaltung ist sichergestellt, dass der Dichtkörper stets zuverlässig an der Innenkontur des Außenrohrs anliegt und eine Dichtwirkung hervorruft. Bevorzugt ist die größte Außenkontur des Dichtkörpers größer aus die Innenkontur des Außenrohrs, bevorzugt um 0,1 mm bis 0,3 mm, ganz bevorzugt um 0,2 mm größer ist. Bei kreisförmigen Konturen wäre somit der Durchmesser der größten Außenkontur des Dichtkörpers größer als der Innendurchmesser des Außenrohres. Im Montagezustand wird der Dichtkörper von dem Außenrohr zusammengepresst, so dass sich eine vorteilhafte Dichtwirkung ergibt. Entweder wird die flexible Dichtlippe nach innen gedrückt oder das Material des Dichtkörpers komprimiert oder zu den Seiten weggepresst. Durch den Anlagedruck des Dichtkörpers an der Innenfläche des Außenrohrs wird das System vorteilhaft abgedichtet. Auf diese Weise können Toleranzen im Außenrohr ausgeglichen werden.

Als besonders vorteilhaft hat sich gemäß einer letzten Ausgestaltung herausgestellt, wenn das Material des Dichtkörpers weicher als das Material des Grundkörpers ist, insbesondere der Grundkörper aus Polypropylen (PP) oder Polyethylen (PE) und der Dichtkörper aus einem Schaumstoff, einer Textilie, einem natürlichen oder synthetischen Kautschuk oder einem Silikon hergestellt ist. Der Grundkörper dient zur Stabilisierung der Verbindung zwischen Innenrohr und Außenrohr und als Ausziehsperre und Abstandsring zwischen Innen- und Außenrohr. Dazu ist das Material des Grundkörpers stabiler und stützt damit den Dichtkörper. Der Dichtkörper dient primär zum Abdichten des verbleibenden Ringspalts zwischen Innenrohr und Außenrohr, so dass ein weicheres Material ein Anliegen des Dichtkörpers und damit ein Verschließen des Ringspalts sicherstellt. Als vorteilhafte Materialien für den Grundkörper eignen sich sämtliche Kunststoffe, insbesondere Polypropylen und Polyethylen. Der Dichtkörper ist vorteilhaft aus einem Schaumstoff oder einer Textilie hergestellt. Als Textilie eignet sich vorzugsweise ein Filz oder Fasermaterial. Bei Verwendung von Kautschuken haben sich Gummi und das unter dem Markennamen Neopren bekannte Material Chloropren-Kautschuk als vorteilhaft herausgestellt. Des Weiteren weisen Silikone eine ausreichende Flexibilität auf, um eine zuverlässige Abdichtung zu gewährleisten. Grundsätzlich sind sämtliche Elastomere vorteilhaft geeignet, um die Dichtfunktion zwischen Innen- und Außenrohr zu gewährleisten.

Im Einzelnen gibt es nun eine Vielzahl von Möglichkeiten, das Dichtsystem für ein Staubsauger-Saugrohr auszugestalten und weiterzubilden. Dazu wird verwiesen auf die dem Patentanspruch 1 nachgeordneten Patentansprüche und auf die nachfolgende Beschreibung von bevorzugten Ausführungsbeispielen in Verbindung mit der Zeichnung. In der Zeichnung zeigen:
- Fig. 1: Eine geschnittene Seitenansicht eines Ausführungsbeispiels eines Dichtsystems,
- Fig. 2: eine perspektivische Ansicht des Ausführungsbeispiels gemäß Fig. 1,
- Fig. 3: eine geschnittene Seitenansicht eines weiteren Ausführungsbeispiels eines Dichtsystems, das nicht Teil der beanspruchten Erfindung ist,
- Fig. 4: eine perspektivische Ansicht des Ausführungsbeispiels gemäß Fig. 3,
- Fig. 5: eine geschnittene Seitenansicht eines weiteren Ausführungsbeispiels, und
- Fig. 6: eine perspektivische Ansicht des Ausführungsbeispiels gemäß Fig. 5.

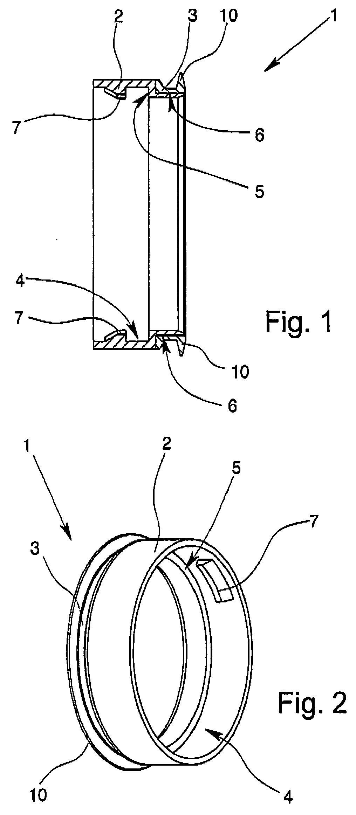

Fig. 1 zeigt ein Ausführungsbeispiel eines Dichtsystems 1 zur Abdichtung zwischen einem Innenrohr und einem Außenrohr eines teleskopierbaren - nicht dargestellten - Staubsauger-Saugrohrs, Das Dichtsystem 1 umfasst einen ringförmigen Grundkörper 2, wobei der Grundkörper 2 aus einem ersten Material gefertigt ist. Das Dichtsystem 1 umfasst des Weiteren einen an dem Grundkörper 2 angeordneten ringförmigen Dichtkörper 3, wobei der Dichtkörper 3 aus einem zweiten Material hergestellt ist. Bei dem ersten Material und dem zweiten Material handelt es sich um unterschiedliche Materialien, die jedoch aus der gleichen Materialobergruppe stammen können.

Der Dichtkörper 3 ist an dem Grundkörper 2 angeordnet, so dass der Grundkörper 2 und der Dichtkörper 3 eine Baueinheit, nämlich das Dichtsystem 1 bilden. Der Dichtkörper 3 erstreckt sich teilweise auf einem Außenumfang des Grundkörpers 2. Sowohl der Grundkörper 2 als auch der Dichtkörper 3 weisen eine ringförmig geschlossene Kontur auf. Der Grundkörper 2 weist an seinem Innenumfang einen Absatz 4 auf, so dass das Dichtsystem 1 auf ein - gemäß Fig. 1 von links einführbares - Innenrohr aufsteckbar ist. Das Innenrohr ist dabei so weit in das Dichtsystem 1 einsteckbar, bis es mit seiner Stirnkante an einen umlaufenden Anschlag 5 ansetzt. Der Anschlag 5 resultiert aus einem Absatz 6, der im Außenumfang des Grundkörpers 2 ausgebildet ist. Der Dichtkörper 3 ist im Absatz 6 angeordnet, so dass der Dichtkörper 3 auf einem Außenumfang des Grundkörpers 2 angeordnet ist. Der Absatz 6 stellt gegenüber dem verbleibenden Außenumfang des Grundkörpers 2 einen Rücksprung aus der Oberfläche dar. Der Absatz 6 ist dabei derart angeordnet, dass er im Montagezustand im von dem Innenrohr abgewandten Endbereich des Grundkörpers 2 angeordnet ist.

Fig. 2 zeigt das Ausführungsbeispiel gemäß Fig. 1 in einer perspektivischen Ansicht. das Dichtsystem 1 ist mit seinem Grundkörper 2 mit dem Absatz 4 auf ein - nicht dargestelltes - Innenrohr soweit aufsteckbar, bis das Innenrohr mit einer Stirnfläche an den Anschlag 5 ansetzt. Zur Fixierung des Innenrohrs sind am Absatz 4 Rastnasen 7 vorgesehen, die im Montagezustand mit einem Rücksprung im Innenrohr verrasten.

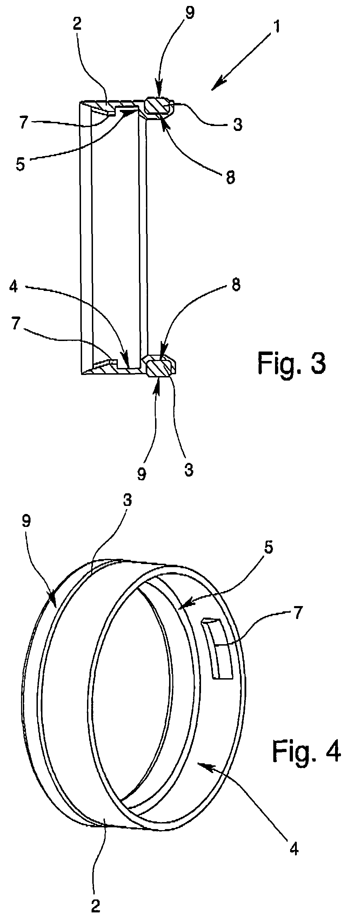

Fig. 3 zeigt ein weiteres Ausführungsbeispiel eines Dichtsystems 1 in geschnittener Seitenansicht. Bei diesem Ausführungsbeispiel handelt es sich nicht um einen Teil der Erfindung, sondern um einen Stand der Technik, der das Verständnis der Erfindung erleichtert.

Im Außenumfang des Grundkörpers 2 ist eine Nut 8 vorgesehen, wobei ein Dichtkörper 3 in der Nut 8 angeordnet ist. Die Nut 8 ist ringförmig umlaufend in einem Außenumfang des Grundkörpers 2 ausgebildet. Der Dichtkörper 3 ist bei diesem Ausführungsbeispiel als separates Bauteil am Grundkörper 2 angeordnet, nämlich als separater Dichtkörper 3 - ausgebildet als Dichtring - in die Nut 8 des Grundkörpers 2 eingesetzt und formschlüssig durch die Nutflanken der Nut 8 gehalten. Der Dichtkörper 3 weist eine Dichtfläche 9 auf. Die Dichtfläche 9 liegt im Montagezustand des Dichtsystems 1 flächig dichtend am Innenumfang des Außenrohrs an und dichtet den zwischen Innenrohr und Außenrohr entstehenden Ringspalt ab.

Der Dichtkörper 3 gemäß Fig. 3 weist einen im Wesentlichen rechteckigen Querschnitt auf, wodurch sich vorteilhaft die Dichtfläche 9 aus der Breite des Dichtkörpers 3 ergibt. Die Breite des Dichtkörpers 3 bzw. die Breite der Dichtfläche 9 entsprechen bei diesem Ausführungsbeispiel etwa einem Drittel der Breite des Grundkörpers 2. Die Höhe des Dichtkörpers 3 entspricht etwa der Hälfte seiner Breite.

Fig. 4 zeigt das Ausführungsbeispiel gemäß Fig. 3 in perspektivischer Ansicht. In den Absatz 4 im Innenumfang des Grundkörpers 2 des Dichtsystems 1 ist ein - nicht dargestelltes - Innenrohr einsteckbar, das mit den Rastnasen 7 verrastbar ist. Die Außenkontur des Dichtkörpers 3 mit seiner Dichtfläche 9 ist um etwa 0,2 mm größer als die Innenkontur des Außenrohres, so dass im Montagezustand das Material des Dichtkörpers 3, insbesondere nämlich die Dichtfläche 9, durch das Anliegen des Außenrohrs nach rechts und links weggedrückt wird, wodurch eine zuverlässige Abdichtung entsteht. Der neben der Nut 8 verbleibende Außenumfang des Grundkörpers 2 dient als Abstandshalter und zur Stabilisierung zwischen Innenrohr und Außenrohr.

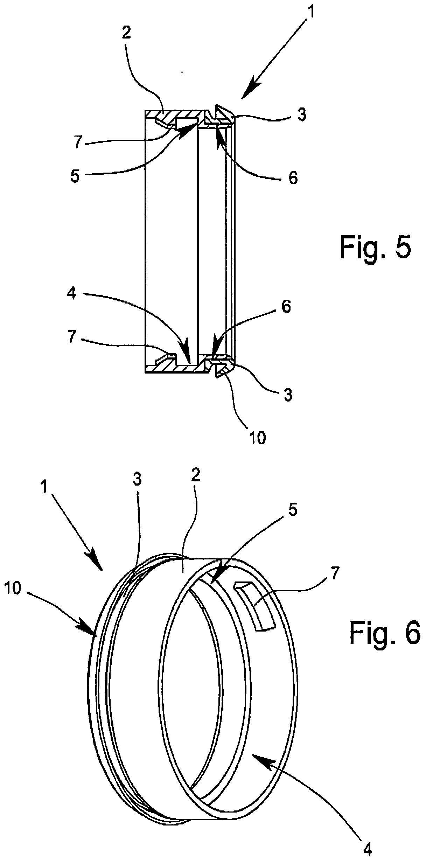

Fig. 5 zeigt ein weiteres Ausführungsbeispiel eines Dichtsystems 1 in geschnittener Seitenansicht. Im Absatz 6 des Grundkörpers 2 ist ein Dichtkörper 3 angeordnet, der eine flexible Dichtlippe 10 aufweist. Die flexible Dichtlippe 10 ist ausgehend von dem - in Fig. 5 rechts dargestellten - Endbereich in Richtung des Grundkörpers 2 geneigt und weist in Radialrichtung eine abnehmende Materialstärke auf. Die Außenkontur des Dichtkörpers 3, insbesondere nämlich die Dichtlippe 10, ist auch bei diesem Ausführungsbeispiel umlaufend um etwa 0,2 mm größer als die Innenkontur des Außenrohres, so dass die Dichtlippe 10 im Montagezustand durch die Innenkontur des Außenrohres nach innen gedrückt wird, wodurch die Dichtlippe 10 flexibel an der Innenkontur des Außenrohrs anliegt und eine zuverlässige Abdichtung realisiert. Der Grundkörper 2 ist bei diesem Ausführungsbeispiel als Polyethylen hergestellt, während die Dichtlippe aus einem Gummi hergestellt ist.

Fig. 6 zeigt das Ausführungsbeispiel gemäß Fig. 5 in perspektivischer Ansicht. Auch dieses Dichtsystem 1 ist mit seinem Absatz 4 im Innenumfang des Grundkörpers 2 auf ein - nicht dargestelltes - Innenrohr aufschiebbar, so dass das Innenrohr zum Anschlag 5 in den Grundkörper 2 hineingeschoben ist und mit den Rastnasen 7 verrastet. Die Dichtlippe 10 ist ausgehend von einem Endbereich in Richtung des Grundkörpers 2 geneigt. Der Grundkörper 2 weist eine im Wesentlichen runde Form auf.

Auch das Ausführungsbeispiel gemäß Fig. 1 und 2 weist eine flexible Dichtlippe 10 auf, die in einem Winkel von 90° zum Boden des Absatz 6 bzw. zur Außenfläche des Grundkörpers angeordnet ist. Die Dichtlippe 10 läuft in radialer Richtung spitz zu - die Materialstärke nimmt kontinuierlich ab, wodurch eine vorteilhafte Flexibilität erreicht wird. Auf der von den Grundkörper 2 abgewandten Seite weist die Dichtlippe 10 eine Neigung auf, die die Reduzierung der Materialstärke hervorruft. Die Außenkontur des Dichtkörpers 2, insbesondere nämlich die Dichtlippe 10, ist um etwa 0,2 mm größer als die Innenkontur des Außenrohres, so dass die Dichtlippe 10 im in das Außenrohr eingebrachten Montagezustand flexibel, vorzugsweise in Richtung des Grundkörpers 2, ausweicht.

## Patentansprüche

1. Dichtsystem (1) zur Abdichtung zwischen einem Innenrohr und einem Außenrohr eines teleskopierbaren Staubsauger-Saugrohrs, umfassend mindestens einen ringförmigen Grundkörper (2) aus einem ersten Material, wobei an dem Grundkörper (2) ein ringförmiger Dichtkörper (3) aus einem zweiten Material angeordnet ist,
**dadurch gekennzeichnet,**
**dass** der Dichtkörper (3) an den Grundkörper (2) angespritzt ist.

2. Dichtsystem (1) nach Anspruch 1, **dadurch gekennzeichnet, dass** der Dichtkörper (3) zumindest teilweise auf einem Außenumfang des Grundkörper (2) angeordnet ist.

3. Dichtsystem (1) nach Anspruch 1 oder 2, **dadurch gekennzeichnet, dass** der Grundkörper (2) in einem Außenumfang mindestens einen Absatz (6) aufweist, und dass der Dichtkörper (2) in dem Absatz (6) angeordnet ist.

4. Dichtsystem (1) nach Anspruch 1 oder 2, **dadurch gekennzeichnet, dass** der Grundkörper (2) in einem Außenumfang mindestens eine Nut (8) aufweist, und dass der Dichtkörper (3) in der Nut (8) angeordnet ist.

5. Dichtsystem (1) nach einem der Ansprüche 1 bis 4, **dadurch gekennzeichnet, dass** der Dichtkörper (3) eine Dichtfläche (9) aufweist, insbesondere die Dichtfläche (9) eine Breite zwischen 0,5 mm und 3,0 mm aufweist.

6. Dichtsystem (1) nach einem der Ansprüche 1 bis 5, **dadurch gekennzeichnet, dass** der Dichtkörper (3) einen im Wesentlichen rechteckigen Querschnitt aufweist.

7. Dichtsystem (1) nach einem der Ansprüche 1 bis 6, **dadurch gekennzeichnet, dass** der Dichtkörper (3) eine flexible Dichtlippe (10) aufweist.

8. Dichtsystem (1) nach Anspruch 7, **dadurch gekennzeichnet, dass** die Dichtlippe (10) geneigt ist, insbesondere die Dichtlippe (10) in Radialrichtung eine abnehmende Materialstärke aufweist.

9. Dichtsystem (1) nach einem der Ansprüche 1 bis 8, **dadurch gekennzeichnet, dass** die größte Außenkontur des Dichtkörpers (3) größer als die größte Außenkontur des Grundkörpers (2) ist.

10. Dichtsystem (1) nach einem der Ansprüche 1 bis 9, **dadurch gekennzeichnet, dass** das Material des Dichtkörpers (3) weicher als das Material des Grundkörpers (2) ist, insbesondere der Grundkörper (2) aus Polypropylen (PP) oder Polyethylen (PE) und der Dichtkörper (3) aus einem Schaumstoff, einer Textilie, einem natürlichen oder synthetischen Kautschuk oder einem Silikon hergestellt ist.

## Claims

1. Sealing system (1) for sealing between an inner pipe and an outer pipe of a telescoping vacuum cleaner suction pipe, comprising at least one annular base body (2) of a first material, wherein an annular sealing body (3) of a second material is arranged on the base body
**characterized in**
**that** the sealing body (3) has been injection molded onto the base body (2).

2. Sealing system (1) according to claim 1, **characterized in that** the sealing body (3) is located at least partially on the outer periphery of the base body (2).

3. Sealing system (1) according to claim 1 or 2, **characterized in that** the base body (2) has at least one shoulder (6) at an outer periphery thereof, and that the sealing body (2) is located in the shoulder.

4. Sealing system (1) according to claim 1 or 2, **characterized in that** the base body (2) has at least one groove (8) in an outer periphery, and that the sealing body (3) is located in the groove (8).

5. Sealing system (1) according to any one of claims 1 to 4, **characterized in that** the sealing body (3) has a sealing surface (9), in particular the sealing surface (9) having a width of between 0.5 mm and 3.0 mm.

6. Sealing system (1) according to any one of claims 1 to 5, **characterized in that** the sealing body (3) has an essentially rectangular cross section.

7. Sealing system (1) according to any one of claims 1 to 6, **characterized in that** the sealing body (3) has a flexible sealing lip (10).

8. Sealing system (1) according to claim 7, **characterized in that** the sealing lip (10) is sloped, in particular the sealing lip (10) has a decreasing thickness in a radial direction.

9. Sealing system (1) according to any one of claims 1 to 8, **characterized in that** the largest outer contour of the sealing body (3) is larger than the largest outer contour of the base body (2).

10. Sealing system (1) according to any one of claims 1 to 9, characterize in that the material of the sealing body (3) is softer than the material of the base body (2), in particular the base body (2) is made of polypropylene (PP) or polyethylene (PE) and the sealing body (3) is made of a foam, a textile, a natural or synthetic rubber, or a silicone.

## Revendications

1. Système d'étanchéité (1) pour l'étanchéité entre un tube intérieur et un tube extérieur d'un tube d'aspiration télescopique d'un aspirateur, comprenant au moins un corps de base (2) de forme annulaire constitué d'un premier matériau, un corps d'étanchéité (3) de forme annulaire en un deuxième matériau étant disposé sur le corps de base (2),
**caractérisé en ce que**
le corps d'étanchéité (3) est moulé par injection sur le corps de base (2).

2. Système d'étanchéité (1) selon la revendication 1, **caractérisé en ce que** le corps d'étanchéité (3) est disposé au moins en partie sur une périphérie extérieure du corps de base (2).

3. Système d'étanchéité (1) selon la revendication 1 ou 2, **caractérisé en ce que** le corps de base (2) présente, dans une périphérie extérieure, au moins un retrait (6) et **en ce que** le corps d'étanchéité (2) est disposé dans le retrait (6).

4. Système d'étanchéité (1) selon la revendication 1 ou 2, **caractérisé en ce que** le corps de base (2) présente dans une périphérie extérieure au moins une rainure (8) et **en ce que** le corps d'étanchéité (3) est disposé dans la rainure (8).

5. Système d'étanchéité (1) selon l'une quelconque des revendications 1 à 4, **caractérisé en ce que** le corps d'étanchéité (3) présente une surface d'étanchéité (9), en particulier la surface d'étanchéité (9) présente une largeur comprise entre 0,5 mm et 3,0 mm.

6. Système d'étanchéité (1) selon l'une quelconque des revendications 1 à 5, **caractérisé en ce que** le corps d'étanchéité (3) présente une section transversale essentiellement rectangulaire.

7. Système d'étanchéité (1) selon l'une quelconque des revendications 1 à 6, **caractérisé en ce que** le corps d'étanchéité (3) présente une lèvre d'étanchéité flexible (10).

8. Système d'étanchéité (1) selon la revendication 7, **caractérisé en ce que** la lèvre d'étanchéité (10) est inclinée, en particulier la lèvre d'étanchéité (10) présente une épaisseur de matériau diminuant dans la direction radiale.

9. Système d'étanchéité (1) selon l'une quelconque des revendications 1 à 8, **caractérisé en ce que** le plus grand contour extérieur du corps d'étanchéité (3) est supérieur en taille au plus grand contour extérieur du corps de base (2).

10. Système d'étanchéité (1) selon l'une quelconque des revendications 1 à 9, **caractérisé en ce que** le matériau du corps d'étanchéité (3) est plus souple que le matériau du corps de base (2), en particulier le corps de base (2) est fabriqué en polypropylène (PP) ou en polyéthylène (PE) et le corps d'étanchéité (3) est fabriqué en mousse, en textile, en caoutchouc naturel ou synthétique ou en silicone.
